**Europäisches Patentamt**

**European Patent Office**

**Office européen des brevets**

(11) Veröffentlichungsnummer: **0 085 163**
**B2**

(12) **NEUE EUROPÄISCHE PATENTSCHRIFT**

(45) Veröffentlichungstag der neuen Patentschrift:
**18.07.90**

(21) Anmeldenummer: **82111527.6**

(22) Anmeldetag: **13.12.82**

(51) Int. Cl.⁵: **C 09 D 9/00**

(54) Abbeizmittel zum Abbeizen von Lacken und Dispersionsfarben.

(30) Priorität: **28.01.82 DE 3202685**
**21.10.82 DE 3239016**

(43) Veröffentlichungstag der Anmeldung:
**10.08.83 Patentblatt 83/32**

(45) Bekanntmachung des Hinweises auf die
Patenterteilung:
**17.09.86 Patenblatt 86/38**

(45) Bekanntmachung des Hinweises auf die
Entscheidung u̇ber den Einspruch:
**18.07.90 Patentblatt 90/29**

(84) Benannte Vertragsstaaten:
**AT DE FR GB NL**

(56) Entgegenhaltungen:
**FR-A-2 438 078**
**GB-A- 446 147**
**US-A-1 118 482**
**US-A-1 620 409**
**US-A-1 829 583**
**US-A-1 884 767**
**US-A-2 176 995**
**US-A-2 207 967**
**US-A-2 750 343**
**US-A-4 120 810**

(73) Patentinhaber: **Georg Scheidel jr. GmbH**
**Postfach 1147**
**D-8606 Hirschaid (DE)**

(72) Erfinder: **Scheidel, Hermann**
**Jahnstrasse 36**
**D-8606 Hirschaid (DE)**

(74) Vertreter: **Herrmann-Trentepohl, Werner, Dipl.-**
**Ing. et al**
**Herrmann-Trentepohl, Kirschner, Grosse,**
**Bockhorni & Partner Forstenrieder Allee 59**
**D-8000 München 71 (DE)**

(56) Entgegenhaltungen:

**Bärlocher, Tech. Merkblatt: Aluminiumseifen**
**(1970)**
**Bärlocher, Techn. Merkblatt: Lackhilfsmittel,**
**Verdickungsmittel Thixotropiemittel für Lacke**
**(1975)**
**Rezepttaschenbuch für die Farben- und**
**Lackindustrie, Wissenschaftliche**
**Verlagsgesellschaft mbh, stuttgart, 1946**
**Die Organisation der chemisch-technischen**
**Klein- und Nebenbetriebe, Verlagsgesellschaft**
**R. Müller mbH, Berlin, 1926**
**Titangesellschaft mbH, Bentone Geliermittel,**
**Bentone 34, Bentone 38 und Bentone 27 für**
**organische Medien, 1968**

EP 0 085 163 B2

# EP 0 085 163 B2

(56) Entgegenhaltungen:

Titangesellschaft mbH, Bentone 34,
"Rheologisches Hilfsmittel für schwachpolare
bis mittelpolare Medien, 1968
ICI ltd., "Methofas", Technisches Merkblatt Nr.
M.2, "Methofas" P200S in Lösungsmittelhaltigen
Abbeizpasten, 1963
Chemische Werke Hüls AG, Emulgatoren, 1962
Tabelle: Toxische Eigenschaften von
Lösemitteln
Nationale Paint & Coatings Association,
Washington: Safety and Health Bulletin No. 48,
Glycol Ethers
Roth, Wassergefährdende Stoffe:
Dichlormethan
Kühn-Birett, Merkblätter Gefährliche
Arbeitsstoffe: Naphtalin
Roth, Wassergefährdende Stoffe: Solvent
Naphtha
Ullmanns Encyklopädie der technischen
Chemie, Band 16, S. 304, 1978 : N-
Methylpyrrolidon
Römpp Chemie Lexikon, p.393, pp 623-26, 1966
Merkblatt I/402 "Hectone LB" Firma Lanco, 8/82
Tenside von Hüls, Ausgabe 7/82, S. 11
Jahrbuch für Praktiker, 1982
Kühn-Birett Merkblätter gefährliche Stoffe,
10/82
Römpp Chemie-Lexikon 1962, S. 482-484
Tenside Taschenbuch von Dr. Stache, Hansa-
Verlag, München/Wien 1979
Veröffentlichung der Firma REWO Chemische
Fabrik GmbH, Ringbuchgruppe 4 0972/333
Jahrbuch für den Praktiker 1981, Seiten 76-77
Römpp Chemie-Lexikon 1966, S. 5116
Bärlocher Metallseifen, 1966

## Beschreibung

Der Erfindung bezieht sich auf ein seifenhaltiges Abbeizmittel gemäss dem Oberbegriff des Patentanspruches 1.

Etwa 70 bis 90% der auf dem Markt verfügbaren Abbeizmittel weisen eine Mischung aus Chlorkohlenwasserstoff, Alkohol und Methylcellulose auf. Dieser Mischung werden zumeist Tenside und Wachse, vorzugsweise Paraffin, zugesetzt, welche auf dem Chlorkohlenwasserstoff-Gelee eine Haut bilden und die Verdunstung verzögern. Weiterhin werden je nach Anwendungszweck polare und unpolare Lösungsmittel der verschiedensten Verdunstungsstufen und Zusammensetzungen eingearbeitet, wie Ketone, Ester, Glykole, Glykolester usw. Als Lösungsmittel für diesen Zweck sind auch Benzine, Aromate, Terpene u. dgl. bekannt, ferner Alkalien oder Säuren zur Wirkungsverstärkung. Als Beispiel hierfür seien Abbeizmittel gemäss FR—A—2 438 078 genannt, bei denen Glycole, Glycolester und Terpene verwendet werden.

Für die Entfernung von Einbrennlacken werden diese Abbeizmittel sicher ihre Bedeutung beibehalten. Der Hauptverbrauch von Abbeizmitteln lässt sich jedoch, neben der Entfernung von Zwei-Komponenten-Lacken oder Einbrennlacken auf zwei weitere grosse Anwendungsgebiete aufteilen, nämlich zum einen das Abbeizen gestrichener Gegenstände aus Holz, wie alte Möbel, Fenster und Türen und das Abbeizen von Abstrichen auf metallischen Gegenständen, wie Dachrinnen, Gartenzäunen usw., wobei auf diesem Anwendungsbereich neben dem Maler zumeist auch der Heimwerker tätig ist, und andererseits das Entfernen von Dispersionsfarben von Hausfassaden, wobei in diesem Anwendungsbereich hauptsächlich der Maler und nur mitunter auch der Heimwerker tätig ist.

Auf diesen beiden Anwendungsbereichen können die bisher bekannten, oben beschriebenen Systeme aus den folgenden Gründen nicht voll befriedigen. Die Mischung aus Chlorkohlenwasserstoff und Alkohol verursacht schon bei kleinsten Spritzern ein starkes Brennen auf der Haut, so dass sofort mit Wasser nachgewaschen werden muss, was jedoch beim Abbeizen grossflächiger Gegenstände lästig ist. Ferner tritt eine sehr starke Geruchsbelästigung ein, wobei Chlorkohlenwasserstoff sowie Methanol oral und inhalativ stark toxisch sind. Als nachteilig kommt hinzu, dass sich die Mischung in Blechgebinden bei längerer Lagerung leicht zersetzt und unter Steigerung der Geruchsbelästigung Konsistenz und Wirksamkeit ändert. Gehen durch Nachwaschen, z.B. beim Arbeiten an Gartenzäunen oder Dachrinnin, Reste in das Erdreich oder das Abwasser, so ist die Umwelt gefährdet.

Beim Entfernen von Dispersionsfarbanstrichen wird von den Herstellern empfohlen, die Fassade mit dem Abbeizmittel abzustreichen und mit einem Dampfstrahlgerät nachzuwaschen. Eine solche Arbeitsweise macht es jedoch unvermeidbar, dass Reste des Abbeizmittels in das Erdreich und/oder in das Abwasser gelangen. Die gallertartige Verbindung von Chlorkohlenwasserstoff, Xylose und Alkohol bleibt dabei homogen und löst sich in Wasser schlecht auf. Sie wird ausserdem druch die Wachse aktiv gehalten.

So können sich, wie durch die Erfahrung nachgewiesen, diese spezifisch schweren Reste an den Verbindungen von Kanalrohren festsetzen und die Dichtungsringe teilweise auflösen. Die Kanalrohre werden dann undicht und müssen dann ausgewechselt werden, was erhebliche Kosten und auch Regressansprüche für den Verwender eines solchen Abbeizmittels zur Folge haben kann.

Auch biologische Kläranlagen werden durch die stark zusammenhaltenden Reste mit hohem Anteil an Chlorkohlenwasserstoff geschädigt. In beiden Anwendungsbereichen entsprechen folglich solche Abbeizmittel nicht mehr den zunehmend strengeren Anforderungen, wie sie heute an Personen- und Umweltschutz gestellt werden.

Es ist ein Abbeizmittel gemäss dem Oberbegriff des Patentanspruches 1 bekannt (US—A—2 207 967), welches zwischen 25 und 75 Gew.% des Mittels unpolares Lösemittel, polares Lösemittel sowie eine erdalkalische Seife enthält. Als Lösemittel ist insbesondere Toluol angegeben, welches ggf. durch Benzol ersetzt werden kann. Ferner wird bei dem bekannten Abbeizmittel neben der Seife auch ein geeignetes Wachs eingesetzt. Dies erfolgt deswegen, um eine Sperre zu bilden, die das Abbeizmittel nach dem Aufbringen auf die abzubeizende Fläche gegen ein Verdunsten des Lösungsmittels nach aussen hin sperrt und damit sicherstellt, dass das aufgebrachte Abbeizmittel flüssig bleibt. Im übrigen sind jedoch die bei dem bekannten Abbeizmittel verwendeten Lösungsmittel hochgiftig und umweltgefährdend, so dass dieses Abbeizmittel nicht den Anforderungen an ein umweltverträgliches Abbeizmittel gerecht werden kann.

Hier will die Erfindung Abhilfe schaffen. Die Erfindung, wie sie in den Ansprüchen gekennzeichnet ist, löst die Aufgabe, ein hochwirksames und zugleich umweltverträgliches Abbeizmittel zu schaffen, welches bei der Anwendung keine Hautreizungen verursacht und auch keine sonstigen gesundheitlichen Schädigungen aufgrund gefährlicher Arbeitsstoffe verursacht.

Die Erfindung soll im folgenden anhand von Ausführungsbeispielen näher erläutert werden:

Beispiel I

Ein Abbeizmittel mit ausserordentlich geringem Gehalt an gesundheitsschädlichen Arbeitsstoffen wird wie folgt hergestellt:

25 bis 70 Gew.-Teile eines unpolaren Lösemittels wie Solventnaphta, Alkylbenzole, Trimethylbenzole und/oder Terpene wie z.B. D-Limonen, Terpentinölen und/oder Ester wie Äthylglykolacetat, Butyldiglykolacetat, Butylglykolacetat oder Ketone werden mit

1 bis 5 Gew.-Teilen Bentoniten unter Rühren, gegebenenfalls unter Erhitzen verdickt, zum Aufschluss und zur weiteren Verdickung werden

10 bis 60 Gew.-Teile polare Lösemittel wie Äthylglykol, Butylglykol, Methylglykole bzw. Butyldiglykol, Äthyldiglykol, Methyldiglykol eingerührt, sowie

5 bis 20 Gew.-Teile Seife, z.B. aus einer Fettsäure wie Olein verseift mit Natronlauge oder Triäthanolamin und

0 bis 4 Gew.-Teile freies Wasser.

Bei genauer Abstimmung der Lösemittel aufeinander entsteht durch die Zugabe von Seife und Wasser ein Gel, welches durch die Bentonite stabilisiert ist.

Ein Abbeizmittel dieser Zusammensetzung ist besonders umweltfreundlich, da es Gras nicht schädigt.

### Beispiel II

2 bis 25 Gew.-Teile des unpolaren Lösemittels, beispielsweise Solventnaphta, werden durch einen Emulgator ersetzt, beispielsweise einen abbaubaren Emulgator, wie ein Fettalkoholpolyglykoläther. Es handelt sich dabei um einen nicht ionogenen Emulgator. Ansonsten wird das Produkt entsprechend Beispiel I verarbeitet.

Je nach der verwendeten Menge an Emulgator wird das Produkt mit Wasser nachwaschbar bzw. emulgiert spontan bei grösseren Emulgatormengen und Berührung mit Wasser. Durch die Auswahl des Emulgators lässt sich die Emulsion so stabilisieren, dass sie auch bei grösserer Verdünnung in der Schmutzflotte der Kanalisation nicht bricht, sondern weiterhin fein verteilt bleibt, so dass biologische Kläranlagen nicht angegriffen werden. Dieses Produkt ist nachwaschbar, aber entzündlich.

### Beispiel III

Zu den in den Beispielen I und II genannten Rezepten können noch Wasser oder anion- oder kationaktive Emulgatoren oder Tenside in geringer Menge zugegeben werden. Damit lässt sich die Verdickung beschleunigen und/oder die Masse lagerstabiler machen.

### Patentansprüche

1. Seifenhaltiges Abbeizmittel zum Abbeizen von Lacken und Dispersionsfarben, enthaltend polare und 25 bis 70 Gewichtsteile unpolare Lösemittel, dadurch gekennzeichnet, dass das Abbeizmittel wachsfrei ist und unpolares Lösemittel flüssig eingerührte Seife und Neztmittel und/oder Emulgatoren in Anteilen von 5 bis zu 20 Gewichtsteilen enthält, mit 10 bis 60 Gewichtsteilen eines polaren Lösemittels verdickt ist sowie von 1 bis zu 5 Gewichtsteilen eines üblichen Verdikkungsmittels, wie Bentonite bzw. mikronisierte Betonite wie z.B. Montmorrilonit enthält, wobei als unpolares Lösemittel Solventnaphta oder die höher siedenden Alkylbenzole oder Trimethylbenzole und/oder Terpene wie z.B. D-Limonen, Terpentinöle, Glykolester oder Ketone und als polare Lössemittel höhere Alkohole oder Glykoläther verwendet werden.

2. Abbeizmittel nach Anspruch 1, dadurch gekennzeichnet, dass der Seifenanteil aus einer Fettsäure, wie Ölsäure, verseift mit einer Lauge und/oder Triäthanolamin besteht.

3. Abbeizmittel nach Anspruch 1 oder 2, dadurch gekennzeichnet, dass es sich bei dem polaren Lösemittel um Äthylglykol, Butylglykol, Methylglykol oder ein Diglykol wie Butyldiglykol, Äthyldiglykol, Methyldiglykol od. dgl. handelt.

4. Abbeizmittel nach einem der vorhergehenden Ansprüche, dadurch gekennzeichnet, dass vom unpolaren Lösemittel 2 bis 25 Gew.-Teile durch einen Emulgator ersetzt sind.

5. Abbeizmittel nach Anspruch 4, dadurch gekennzeichnet, dass als Emulgator ein Fettalkoholpolyglykoläther wie z.B. Nonylphenolpolyglykoläther verwendet ist.

6. Abbeizmittel nach einem der Ansprüche 1 bis 5, dadurch gekennzeichnet, dass ihm in Mengen bis zu 20 Gew.-Teilen zusätzlich Wasser oder anion- oder kationaktive Tenside zur Verdickung als Gel zugesetzt sind.

7. Abbeizmittel nach einem oder mehreren der vorhergehenden Ansprüche, dadurch gekennzeichnet, dass ihm zur Verdickung nur Bentonite zugesetzt sind.

### Revendications

1. Produit de décapage contenant du savon pour le décapage de laques et de peintures en dispersion, qui contient des solvants polaires et 25 à 70 parties en poids de solvants non polaires, caractérisé en ce que le produit de décapage ne contient pas de cire et contient de 5 à 20 parties en poids de savon et de produits mouillants et/ou d'émulsifiants incorporés par brassage à l'état liquide dans un solvant non polaire, est épaissi par 10 à 60 parties en poids d'un solvant polaire et contient de 1 à 5 parties en poids d'un épaississant usuel comme les bentonites ou les bentonites micronisées, comme par exemple, la montmorrillonite, les solvants utilisés étant, pour les solvants non polaires, le solvant naphta ou les benzènes d'alkyl ou de triméthyl ayant une température d'ébullition plus élevée et/ou les terpènes, comme par exemple les D-limones, les huiles de térébenthine, les esters de glycol ou les cétones et, pour les solvants polaires, des alcools supérieurs ou des éthers glycols.

2. Produit de décapage selon la revendication 1, caractérisé en ce que la partie savon est constituée par un acide gras, comme l'acide oléique, saponifié par une lessive et/ou une triéthanolamine.

3. Produit de décapage selon la revendication 1 ou 2, caractérisé en ce que le solvant polaire est de l'éthylglycol, du butylglycol, du méthylglycol ou un diglycol comme le butyldiglycol, l'éthyldiglycol, le méthyldiglycol ou un produit analogue.

4. Produit de décapage selon l'une des revendications précédentes, caractérisé en ce que 2 à 25 parties en poids du solvant non polaire sont remplacées par un émulsifiant.

5. Produit de décapage selon la revendication 4, caractérisé en ce qu'on utilise comme émulsifiant un polyglycoléther d'alcool gras, comme par exemple, le polyglycoléther de nonylphénol.

6. Produit de décapage selon l'une des revendications 1 à 5, caractérisé en ce qu'on lui ajoute, pour son épaississement, sous forme de gel, des quantités pouvant aller jusqu'à 20 parties en poids d'eau ou de produits tensio-actifs à anions ou à cations actifs.

7. Produit de décapage selon l'une ou plusieurs des revendications précédentes, caractérisé en ce que, pour l'épaississement, on n'ajoute que de la bentonite.

**Claims**

1. A soap-containing remover for removing varnishes and dispersion paints, containing polar solvents and 25 to 70 parts by weight of non-polar solvents, characterized in that the remover is free of wax and contains from 5 to 20 parts by weight of soap and of wetting agents and/or of emulsifiers stirred in liquid form into nonpolar solvent, is thickened with 10 to 60 parts by weight of a polar solvent and contains from 1 to 5 parts by weight of a conventional thickening agent such as bentonites or mirconized bentonites such as for example montmorillonite, the non-polar solvent used being solvent naphtha or the higher-boiling alkyl benzenes or trimethyl benzenes and/or terpenes such as D-limonene, terpentine oils, glycol esters or ketones, and the polar solvents used being higher alcohols or glycol ethers.

2. The remover according to claim 1, characterized in that the proportion of soap consists of a fatty acid such as oleic acid saponified with an alkaline solution and/or triethanol amine.

3. The remover according to claim 1 or 2, characterized in that the polar solvent is ethyl glycol, butyl glycol, methyl glycol, or a diglycol such as butyl diglycol, ethyl diglycol, methyl diglycol or the like.

4. The remover according to any of the preceding claims, characterized in that 2 to 25 parts by weight of the non-polar solvent are replaced by an emulsifier.

5. The remover according to claim 4, characterized in that the emulsifier used is a fatty alcohol polyglycol ether such as nonyl phenol polyglycol ether.

6. The remover according to any of the claims 1 to 5, characterized in that water or anion-active or cation-active tensides are additionally added to it in amounts of up to 20 parts by weight to thicken it as a gel.

7. The remover according to one or more of the preceding claims, characterized in that only bentonites are added for thickening.